# EUROPEAN PATENT SPECIFICATION

(11) **EP 0 870 431 B1**
(45) Date of publication and mention of the grant of the patent: **30.06.2004**
(21) Application number: 98200633.0
(22) Date of filing: 02.03.1998
(51) Int. Cl.: A23B 4/32

(54) **Machine for rubbing and salting raw meats intended for curing and preservation**
Vorrichtung zum Reiben und Salzen von rohen Fleischwaren zum Reifen und Konservieren
Appareil de frottage et de salage de viandes crues pour la maturation et la conservation

(30) Priority: 06.03.1997 IT RE970012; 02.12.1997 IT RE970095
(43) Date of publication of application: 14.10.1998
(73) Proprietor: MACCHINE SONCINI ALBERTO S.p.A., I-43013 Langhirano (Parma) (IT)
(72) Inventor: Soncini, Alberto, 43013 Langhirano (Parma) (IT)
(74) Representative: Corradini, Corrado

(56) References cited:
- EP-A- 0 040 441
- FR-A- 2 507 863
- FR-A- 2 559 070
- NL-A- 9 001 785
- US-A- 3 788 529
- US-A- 4 753 374
- US-A- 5 472 722

## Description

This invention relates to machines for rubbing and salting raw meat pieces intended for curing, using salt, or mixtures of salt and flavouring substances, known as curing agents.

Specifically it relates to machines suitable for processing meats intended for product curing and preservation as hams and meat pieces of substantially flat form, even though geometrically irregular, such as speck, bacon, Coburg, meat flakes, etc. For preparation for curing and preservation, said meat products are firstly rubbed with moist salt or so-called curing agents to facilitate the penetration of these substances, they are then spread with a certain quantity of fine dry salt, and are finally placed in appropriate environments for the time necessary to achieve their salting.

Mechanizing this presalting and/or salting treatment, especially when so-called curing agents are used, which in addition to salt contain highly water-soluble flavouring substances such as sugar, which tend to agglomerate, presents so far unsolved problems deriving from the tendency of said substances to form a sort of non-runnable compact mass which makes it very difficult to manipulate them, meter them and distribute them.

This occurs mainly in the presalting stage by rubbing, because the salty substances are generally recycled to re-use them in order to reduce their consumption.

The document FR 2507863 discloses a machine for rubbing and salting raw meats comprising a conveyor for the meat pieces to be salted, a dispenser of moist salt, positioned above said conveyor and near to rubbing/beating means, and a dispenser of fine dry salt positioned downstream said rubbing/beating means.

The moist salt dispenser is positioned above the lateral rubbing and beating means and deliver the salt exclusively to these means; the salt falls under the action of said lateral beating means, that propel a portion of the salt also to an upper rubbing/beating means treating the upper surface of the ham.

The conveyor is a continuous belt without apertures, and the salt which does not adhere to the ham skin is collected on said belt.

At the downward end of the conveyor belt and coplanar thereto a short chain conveyor is associated to lower rubbing/beating means positioned under the chain conveyor for rubbing and salting the lower surface of the ham.

The moist salt is delivered by the conveyor belt to a transversal tray from which it is collected by said rubbing-beating means.

The machine disclosed by the document FR 2507863 presents some drawbacks due to the not always proper distribution of the moist salt, and to the difficult metering thereof.

The main object of this invention is to provide proper distributor means of the moist salt and curing agents avoiding the tendency of the moist salt and curing agents to form non runnable compact masses very difficult to manipulate.

An object of this invention is to provide a salt distributor device for use in machines for automatically effecting the preparation operations for curing, typically presalting with simultaneous rubbing, using either salt or so-called curing agents.

A further object is to provide a device for the indicated objects which is particularly flexible in operation.

These and further objects are attained by the invention as characterised in the claims.

Hereinafter, for simplicity, the term moist salt will also include curing agents and salting substances.

The device of the invention is intended for application to a machine comprising generally, for the meat pieces, an endless conveyor, of which the movable transporting member for the product to be treated comprises wide apertures, and at least one rubbing/beating moist salt distributor means having a rotary member, in the form of flexible flaps, steel mesh or the like, which is positioned both below and above the upper branch of the conveyor.

Below the rotary member there is positioned a trough fed continuously with moist salt through which the flaps move, these making contact with the lower surface of the meat pieces in order to effect a rubbing action with the moist salt collected in the trough.

Above the upper arm of the conveyor there is located a distributor for metering fine dry salt, this forming a substantial part of the invention as defined in the claims.

The merits and characteristics of the invention will be apparent from the detailed description given hereinafter with reference to the accompanying drawings, which illustrate preferred embodiments thereof by way of non-limiting example.
Figure 1 is a section through a first preferred embodiment, taken on the vertical longitudinal plane of the machine.
Figure 2 is a cross-section on the plane II-II of Figure 1, showing the lower part of the machine.
Figure 3 is a section through a further preferred embodiment, taken on the vertical longitudinal plane of the machine.
Figure 4 is a cross-section on the plane IV-IV of Figure 3, showing the lower part of the machine.
Figure 5 is an enlarged detail of Figure 3 seen from the outside, with parts removed to show the underlying parts.
Figure 6 is a plan view of the base of the trough with the underlying rotary distributor.
Figure 7 is a plan view from above showing a detail of the machine.
Figure 8 is a partly sectional side view of the fine salt metering dispenser.
Figure 9 is a section on the plane IX-IX of Figure 8.
Figure 10 is a section on the plane X-X of Figure 9.

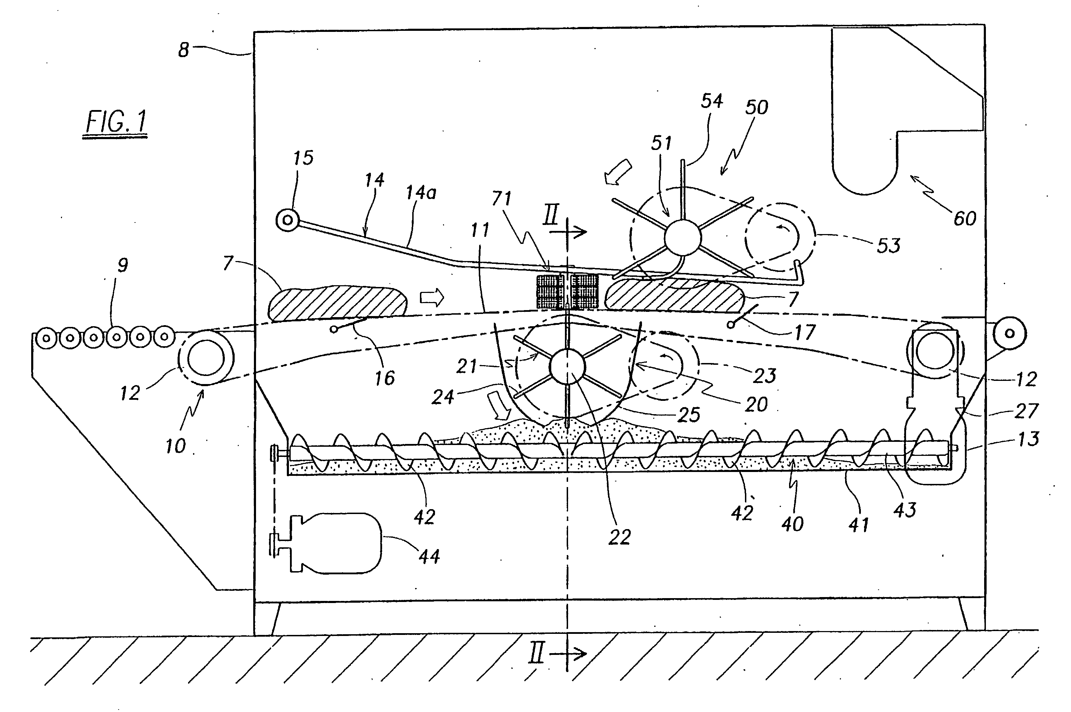

In a first embodiment shown in Figures 1, 2, 7, 8, 9 and 10, the machine comprises an endless conveyor 10 having, for the meat pieces 7, a movable transport member possessing large apertures. Said movable member of the conveyor consists of a number of articulated chains 11 (or equivalent means) passing endlessly about end wheels 12 and driven by a geared motor 13. The chains are spaced apart side by side, and are arranged to support the meat pieces 7.

To increase the friction between the pieces 7 and the chains 11, the links of these latter,are provided with roughness.

Furthermore, the upper branch of the chains 11 rests on suitable guide means (not shown) which enable their upper branch to define a slightly arched path with its concavity facing downwards.

With the conveyor there is associated a first rubbing/beating distributor means 20 comprising a flap-type rotary member 21 rotating about a transverse horizontal axis positioned below the upper branch of the conveyor 10.

In detail, the rotary member 21 comprises a hub 22 with its axis transverse (to the movement of the conveyor 10) and driven by a motor 23, and to which there are fixed various elastic and sufficiently flexible flaps 24 (for example of elastomer material) preferably provided with a plurality of regular small projections 241 which increase the massaging efficiency. The flaps 24 are arranged in several rows, each row comprising a number of axially adjacent flaps 24 spaced apart to define gaps in correspondence with the chains 11.

The free ends of said flaps 24 pass beyond the support surface defined by chain 11, so as to make contact with the lower surface of the meat pieces 7 to perform a rubbing/beating action on them.

Below the rotary member 21 there is positioned a trough 25, the longitudinal axis of which is parallel to the axis of the member 21, and within which the flaps 24 move to graze its inner surface.

Below the upper branch of the conveyor 10 there is a salt recovery tray 27, the cross-section of which is shaped substantially as a hopper, ie converging downwards. With the tray 27 there are associated a pair of parallel screw assemblies 40 positioned at a third of the width of the trough and having their axis parallel to the direction of advancement of the conveyor 10. Each screw assembly 40 has a semi-circular jacket 41 in the form of an upperly open channel, into which there converge the walls of the recovery tray 27 plus a further two walls 27b positioned in the intermediate lower region between the two screw assemblies, and has two screws 42 carried by a shaft 43 driven by a motor 44. The two screws 42 of each screw assembly 40 converge, working in opposite directions, towards the centre of the shaft 43.

The screw assemblies accumulate salt below the lower aperture of the trough 25, and cause the salt to rise spontaneously into the trough where it is available to the rotary flaps 24.

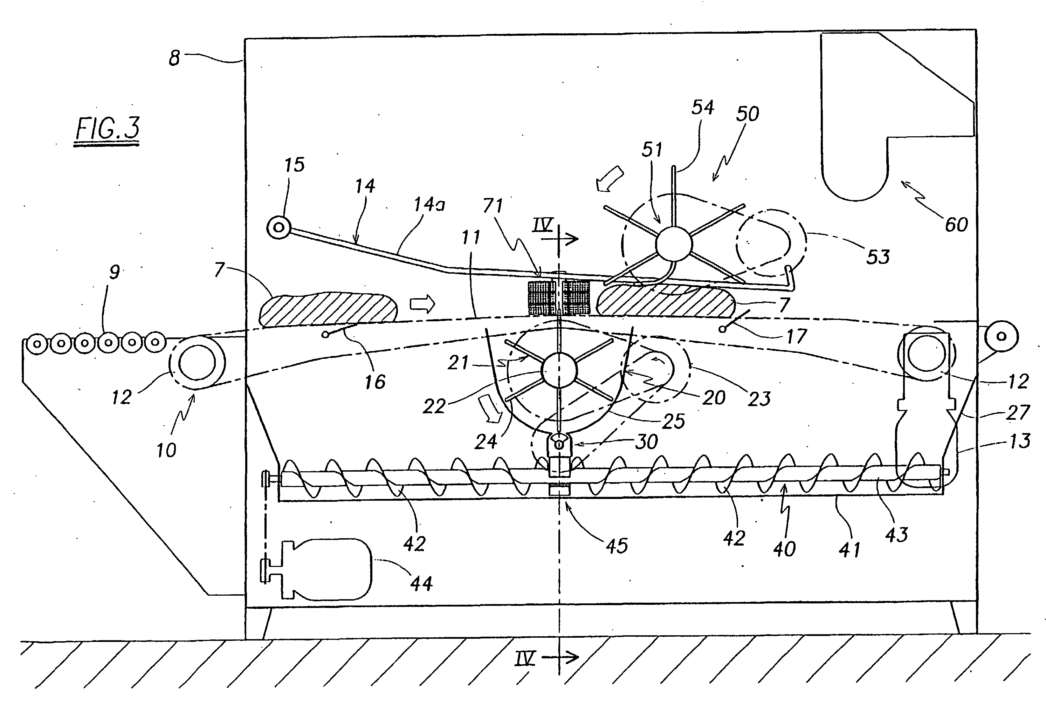

The embodiment shown in Figures 3 to 10 differs from the aforedescribed embodiment by the form of the means for feeding the salt to the trough 25.

With reference to said figures, with the rotary member 21 there are associated means for feeding the trough 25 with salt and similar substances, such that the quantity of substance distributed is substantially constant along the axial dimension of the rotary member 21.

These feed means comprise a rotary distributor 30 having its axis parallel to the axis of the rotary member 21 and operating within a jacket 31 joined to the lower portion of the trough 25 and forming with it a communication aperture 25a which extends along the entire axial dimension of the hub 22 of the rotary member 21.

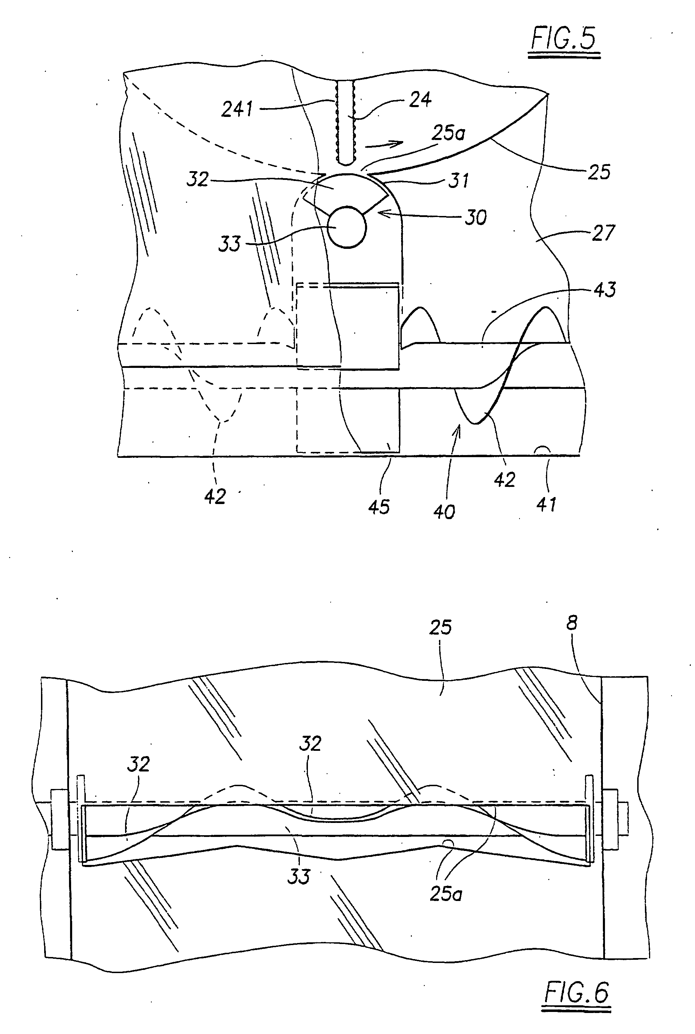

The aperture 25a (see Figure 5) is narrowest in its central part and gradually widens towards the ends to facilitate uniform distribution, along the entire width of the trough, of the salt carried by the underlying rotary distributor 30.

The distributor 30 also comprises a profiled radial blade 32 arranged to transfer the salt into the trough 25 through said communication aperture 25a. Said blade 32 is carried by shaft 33 driven by the motor 23, it extends partly about the shaft and is shaped to provide axially opposing thrusts.

Two bladed rotary members 45, carried by the shafts 43 of the screw assemblies 40, are fed by the screws 42 and feed the salt into the rotary distributor 30.

Each bladed member 45 is located between two walls 46 which are joined to the walls of the tray 27, and in correspondence with the jacket 41 form a circular cradle for the salt, having the diameter of the jacket 41. Upperly, the walls 46 extend vertically tangential to the path of the blades 45, and join the jacket 31 of the rotary distributor 30 to form a communication aperture 46a involving a small region thereof.

The blade 32 is shaped to take account of the presence of the two screw assemblies 40. It is shaped to form two undulations, the maximum point of which lies in correspondence with the axes of the two screw assemblies 40, each undulation being very open with its minimum point joining the other undulation at its centre. This shape is such as to urge the salt, in correspondence with each undulation maximum point, in two axially opposite directions such as to distribute it uniformly in an axial direction and cause it to pass through the aperture 25a.

The shape of the aperture 25a reflects the form of the blade 32. In this respect it narrows in correspondence with the maximum points of the blade 32, this shape facilitating uniform axial distribution of the salt.

In use, the meat pieces 7 are positioned successively on the chains 11, for example by a roller feed table 9 arranged upstream of the conveyor 10. Each piece 7 has a width sufficient to involve at least two chains 11.

The tray 27 normally contains a certain quantity of salt and the like, which by gravity falls onto the base of the jackets 41 of the screw assemblies 40.

On rotating, these latter by virtue of the opposite-handed winding of their two screws 42 urge the salt into the trough 25, either directly or via the bladed rotary member 45, so feeding it.

In the embodiment which comprises the bladed rotary member 45, this transfers the salt into the centre of the rotary distributor 30, via the apertures 46a.

From here, the substance is transferred through the profiled aperture 25a and into the trough 25 by the distributor 30. Because of the shape of the aperture 25a and the fact that the blade 32 of the distributor 30 has a double undulation shape such as to distribute the substance axially, said blade 32 withdraws the substance from the apertures 46a and transfers it into the trough 25, distributing it in a substantially homogeneous manner along the entire axial dimension of the trough.

The flaps 24 which rotate within the trough 25 are hence struck to a substantially equal extent'by the substance originating from the tray 27. On rotating, the flaps 24 withdraw the substance from the base of the trough 25 and propel it upwards above the upper branch of the conveyor 10. On again falling, the substance creates a substantially uniform spray which strikes the meat pieces 7 advancing on the chains 11. That salt which does not remain on the pieces 7 again falls into the recovery tray 27.

An outer casing 8 is provided to enclose all those machine members involved with the salt.

Moreover, during rotation, the flaps 24 intercept the path of the pieces 7 to produce a rubbing action against their lower surface. In addition, that surface of the flaps 24 which slaps the pieces 7 retains a part of the salt (both by adhesion and because of the presence of the small projections 241) with which it comes into contact within the trough 25, and then rubs it against the lower and lateral surfaces of the pieces 7.

The machine also comprises two second rubbing/beating means, each having a flap member 71 rotating about a vertical axis, they being positioned to the sides of the conveyor 10 within the region of influence of the first rubbing/beating means 20, and having flaps arranged to come into contact with the lateral surface of the meat pieces 7 to provide a rubbing action with the salt or with the curing agents manipulated by them.

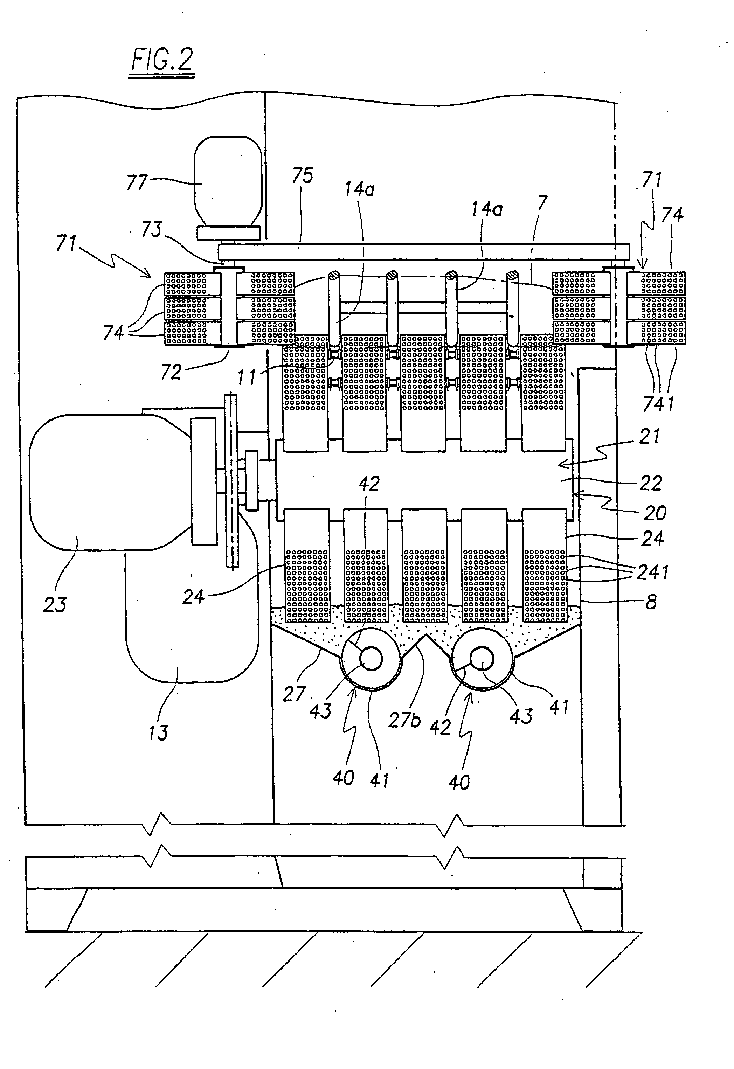

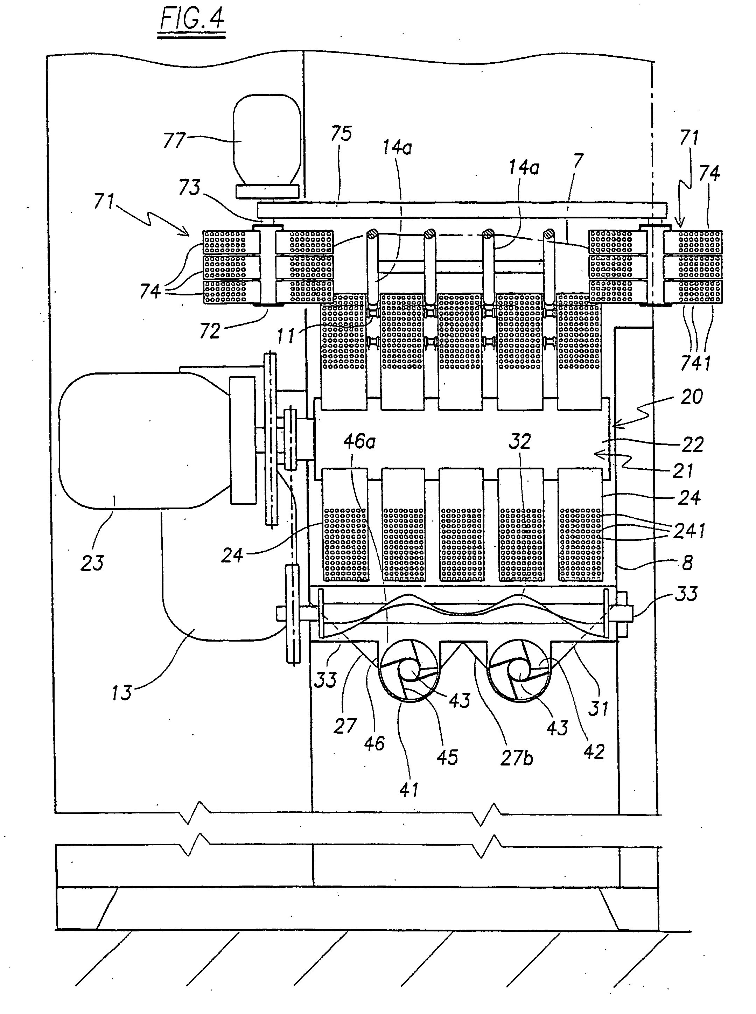

In detail, in Figures 2 and 4, the rotary member 71 comprises a hub 72 of vertical axis, to which there are fixed various elastic and sufficiently flexible flaps 74 (for example of elastomer material) preferably provided with a plurality of regular small projections 741 which increase the massaging efficiency. The flaps 74 are arranged in several rows, each row comprising a number of axially adjacent spaced-apart flaps 74.

Said flaps interfere with the region along which the meat piece 7 passes, in such a manner as to come into contact with its lateral surface to perform the rubbing and beating action.

The upper ends of the shafts 73 of the hubs 72 are carried by a support element 75 positioned transversely above the passage region for the meat pieces 7 on the conveyor 10, and are connected to a motor 77 for transmission purposes.

The salt propelled by the flaps 24 also strikes the flaps 74 of the rubbing/beating means 70, these then rubbing said salt onto the lateral surface of the meat pieces.

The machine also comprises a third rubbing/beating means 50, positioned above the upper branch of the conveyor 10 and downstream of the first rubbing/beating means 20, it being driven by a motor 52 and comprising a hub 51 provided with flaps 54.

These latter are substantially equal to the flaps 24, they are arranged in the same manner and act by slapping the meat pieces 7 placed on the chains 11, to provide a rubbing action on their upper surface.

The salt propelled by the flaps 24 also strikes the flaps 54 of the upper rubbing/beating device 50, these then rubbing this salt onto the meat pieces 7.

There is also provided a metal frame 14 rocking about a horizontal transverse shaft 15 positioned above the upstream end of the conveyor 10. The frame 14 comprises rods 14a rocking in the vertical planes defined by the transport chains 11 and positioned above these latter, they being arranged to slidingly bear against the meat pieces 7 positioned on the chains 11, in correspondence with the rubbing/beating means 20 and 50. The weight of the frame 14 acts on the meat pieces 7 to maintain them rigid with the transport chains 11.

In both embodiments, downstream of the rubbing/beating means 50 there is provided a dispensing device for metering dry fine salt, such as to cause a curtain of salt to fall from above onto the meat pieces 7, in the desired quantity.

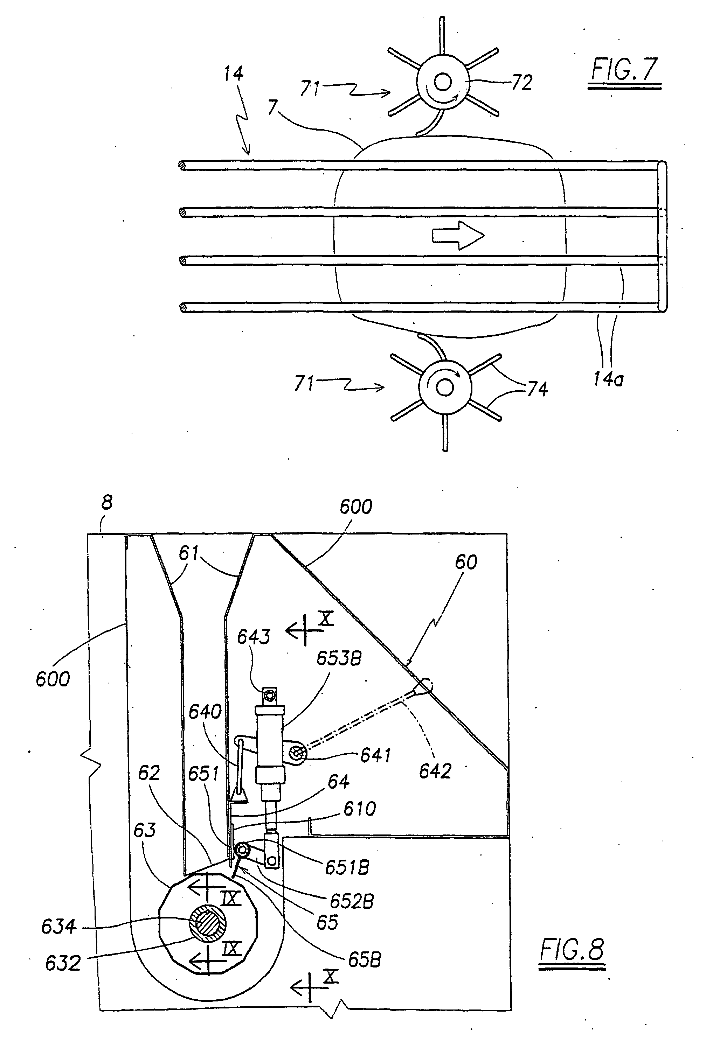

The metering-dispensing device 60 is shown in Figures 8 to 10. It comprises a casing with two lateral walls 600, between which there is positioned an upperly open transverse hopper 61, the inclined lower mouth 62 of which closely overlies a transverse metering roller 63.

The metering roller 63 is divided axially into three parts 631, 632 and 633, of which the two end parts 631 and 633 rotate independently of the central part 632, as will be apparent hereinafter:

The metering roller 63 is rotatably supported between the lateral walls 600 of the casing, and is coupled to an adjustable-speed drive 630 arranged to rotate it at a rotatable speed between 12 and 24 r.p.m.

The drive 630 is controlled by a microprocessor which enables the desired r.p.m., corresponding to the salt dispensing rate, to be easily set.

The roller 63 has a polyhedral cross-section, namely dodecahedral in the illustrated example, and has a maximum diameter of between 100 mm and 300 mm.

The roller 63 can however have a polyhedral section with a greater number of sides, until approximating to a circular section, depending on the characteristics of the product to be distributed.

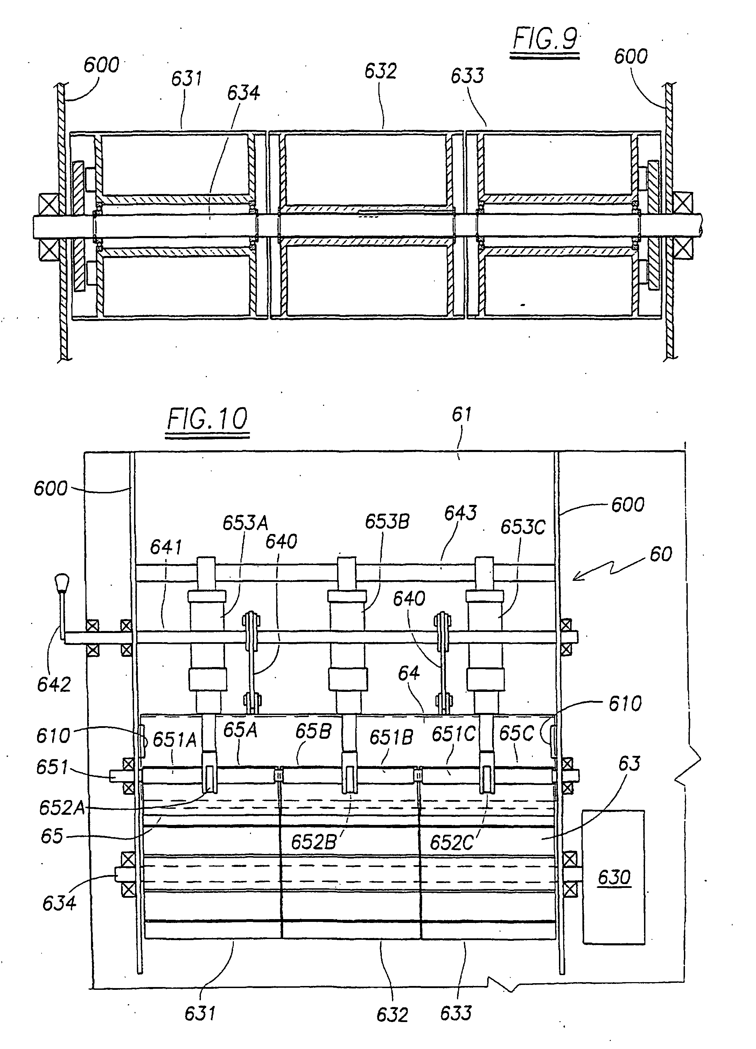

As can be clearly seen in Figures 9 and 10, the motor 630 drives the shaft 634, on the centre of which there is fixed the central part 632 of the roller 63, this part being torsionally locked to the shaft by a key or other like device.

To the sides of the central part there are idly positioned the two parts 631 and 633 of the roller 63, these parts being connected to the shaft 634 by electromagnetic clutches, to enable them to be rotated independently of the central part.

More specifically, the two lateral parts rotate only when the widened flat part of a ham passes below the roller, and halt when the thin part or shank passes below the roller, the central part 632 rotating for the whole time of passage of the ham.

In this manner a considerable economy of fine salt is achieved, this as is well known not being recycled.

The mouth 62 is inclined in the direction of advancement of the product so that that side thereof which is downstream in the direction of advancement of the ham is spaced from the surface of the roller 63.

A gate 64 is suspended to the side of the mouth 62 of the hopper 61 by two connecting rods 640 pivoted upperly to the cranks of a transverse shaft 641, which extends outwards from the lateral walls 600 where it receives an operating lever 642, by which the operator can set the position of the gate and hence vary the salt exit port.

Downstream of the gate 64 the invention comprises a rotating shutter 65 which branches from a shaft 651 rotatably supported between the lateral walls 600.

The shutter 65 is conveniently divided into three independent parts 65A, 65B and 65C, each fixed to a respective crank 652A, 652B and 652C deriving from a tube portion 651A, 651B and 651C respectively.

The said three tube portions 651A, 651B and 651C are mounted idly on the shaft 651, the respective cranks being connected to the cylinder-piston units 653A, 653B and 653C.

The three cylinder-piston units are fixed to a shaft 643 supported by the walls 600.

The cylinder-piston units 653A, 653B and 653C cause the parts A, B and C of the shutter 65 to rotate independently of each other between a position in which they are in contact with the respective parts of the metering roller 63, and a position in which they are spaced therefrom.

The operation of the cylinder-piston units is automatic and simultaneous with the passage of the meat pieces 7.

The rotary member 21 rotates in the anticlockwise direction of Figures 1 and 3, as does the upper rubbing/beating means 50. In contrast, the rotary members 71 rotate in such a direction that the flaps which come into contact with the meat pieces 7 move in the same direction as these latter.

However in practice these rotations can be reversed, either both or individually, to adapt the presalting treatment to different types, shapes or dimensions of meat pieces.

Advantageously, the rotary member 21, the distributor 30, the screw assemblies 40 and the rubbing/beating means 70 and 50 can be made normally inactive and be activated only when a piece of meat operates a switch 16 positioned upstream of the group. This is substantially to prevent them operating loadless.

Likewise, the salting-metering device 60 can be made normally inactive and be activated only when a piece of meat operates a switch 17 positioned upstream of it. This is again substantially to prevent the the device 60 operating loadless.

Numerous modifications of a practical and applicational nature can be made to the invention, but without leaving the scope of the inventive idea as claimed hereinafter.

## Claims

1. A machine for rubbing and salting with salt or curing agents meat pieces intended for curing and preservation, comprising an endless conveyor (10) for the meat pieces (7) the movable member (11) of which may comprise apertures; at least one rubbing/beating moist salt distributor means (20) positioned below the upper branch of the conveyor ; rubbing/beating moist salt distributor means (50) positioned above the upper branch of the conveyor in the region of the lower rubbing/beating means (20) ; and a fine dry salt metering-dispensing device (60) positioned over the upper branch of the conveyor downstream the rubbing/beating distributor means (20, 50)
**characterised in that** the lower rubbing/beating moist salt distributor means (20) comprise a rubbing/beating rotary member (21) of flap-type (24) which is positioned transversely below the upper branch of the conveyor (10), a salt recovery tray (27) positioned under the whole length of the conveyor; means (40) to accumulate the salt in the region of the tray underlying said rotary member (21), said flaps (24) being arranged to collect moist salt in said recovery tray (27) and to propel it above the upper branch of the conveyor (10) and to come into contact with the lower surface of the meat pieces (7).

2. A machine for rubbing and salting meat pieces as claimed in claim 1, **characterised in that** the salt recovery tray (27) has a downwardly converging cross-section and comprise at least one screw assembly (40) having a jacket (41) in the form of an upwardly open channel into which the walls of the recovery tray (27) converge, the screw assembly having two screws (42) converging towards the centre of the shaft (43) of the screw assembly.

3. A machine for rubbing and salting meat pieces as claimed in claim 2, **characterised in that** the rotary member (21) of flap-type (24) is positioned within a trough (25) fed with salt by the two converging screws.

4. A machine for rubbing and salting meat pieces as claimed in claim 2, **characterised by** comprising two side-by-side parallel screw assemblies (40), each comprising a jacket (41) in the form of an upwardly open channel, into which the walls of the recovery tray (27) converge; each assembly comprising two screws (42) converging towards the centre of each shaft (43) of the screw assembly.

5. A machine for rubbing and salting meat pieces as claimed in claim 1, **characterised by** comprising, to the sides of the conveyor (10) within the region of influence of the first rubbing/beating means (20), at least one pair of rubbing/beating means, each having a flap-carrying member rotating about a vertical axis, its flaps (74) being arranged to come into contact with the lateral surface of the meat pieces (7).

6. A machine for rubbing and salting meat pieces as claimed in claim 1, **characterised in that** the movable member of the conveyor (10) consists of several spaced apart side-by-side articulated chains (11) or equivalent means arranged to support the meat pieces (7).

7. A machine for rubbing and salting meat pieces as claimed in claim 6, **characterised in that** the upper branch of the conveyor chains (11) defines an arched path with its concavity facing downwards.

8. A machine for rubbing and salting meat pieces as claimed in claim 1, **characterised by** comprising a metal frame (14) having rods (14a) rotating in the individual vertical planes of the transport chains (11) and bearing on them, the frame being arranged to slidingly bear on the meat pieces (7) positioned within the region of action of the rubbing/beating means (20, 50) to maintain said pieces (7) rigid with the transport chains (11).

9. A machine for rubbing and salting meat pieces as claimed in claim 1, **characterised in that** the dispensing and metering device for fine dry salt comprises a casing with two lateral walls (600), between which there is supported a hopper (61) the lower mouth (62) of which overlies a metering roller (63) of polyhedral cross section, means (65) for varying the salt dispensing port existing between the lower mouth of the hopper (61) and the metering roller (63), and means (64) for closing and respectively opening the salt dispensing port created between the edge of the hopper (61) and the metering roller (63).

10. A machine as claimed in claim 9, **characterised in that** the metering roller (63) is motorised and is adjacent to one of the edges of the hopper (61), there being provided a gate (64) arranged to assume a position in which it closes the space between the metering roller (63) and the opposing edge of the hopper (61), and a position in which it opens said space, an adjustable shutter (65) being provided to vary said space.

11. A machine as claimed in claim 9, **characterised in that** the lower mouth (62) of the hopper (61) is inclined in the direction of rotation of the metering roller (63).

12. A machine as claimed in claim 9, **characterised in that** said metering roller (63) is mounted on a shaft (634) supported by the lateral walls (600) of the casing and rotated by the motor (630).

13. A machine as claimed in claim 9, **characterised in that** the metering roller (63) is axially divided into two and preferably three parts (631), (632), (633).

14. A machine as claimed in claim 13, **characterised in that** the central part (632) of said metering roller (63) is always torsionally engaged by the shaft (634).

15. A machine as claimed in claim 13, **characterised in that** the parts (631) and (632) into which the metering roller (63) is divided can be rotatably constrained to the shaft (634) by disengageable coupling means.

16. A machine as claimed in claim 15, **characterised in that** said disengagable means are electromagnetic clutches.

17. A machine as claimed in claim 9, **characterised in that** said gate (64) is suspended by a pair of connecting rods (640) supported at their opposite end by a pair of cranks on a shaft (641) rotatably mounted between the lateral walls (600) of the casing, and carrying at one end a lever (642) external to the lateral wall and operable by the operator.

18. A machine as claimed in claim 9, **characterised in that** the means for closing and respectively opening the salt dispensing port created between an edge of the hopper (61) and the metering roller (63) comprise a rotary shutter (65) fixed to a shaft (651) rotatably mounted between the lateral walls (600) of the casing and provided with a crank engaged by a cylinder-piston unit fixed to the casing to rotate the shutter (65) between two positions, one adjacent to the metering roller (63) and one spaced from the metering roller (63).

19. A machine as claimed in claim 18, **characterised in that** said shutter (65) is divided into at least two and preferably three parts (65a), (65b), (65C), each of which is operated independently of the others by a cylinder-piston unit (653a), (653b), (653C).

## Patentansprüche

1. Maschine zum Reiben und Salzen mit Salz oder Pökelmitteln von Fleischstücken, die zum Pökeln oder für die Konservierung bestimmt sind, die aus einem Kreisförderer (10) für die Fleischstücke (7), dessen beweglicher Teil (11) Öffnungen enthalten kann; zumindest einer reibenden/klopfenden Streuvorrichtung für feuchtes Salz (20), die unterhalb des oberen Arms der Fördervorrichtung positioniert ist, einer reibenden/klopfenden Streuvorrichtung für feuchtes Salz (50), die oberhalb des oberen Arms der Fördervorrichtung, im Bereich der unteren reibenden/klopfenden Vorrichtung (20) positioniert ist; und einer über dem oberen Arm der Fördervorrichtung, unterhalb der reibenden/klopfenden Streuvorrichtung (20,50) positionierten Dosier-/Ausgabevorrichtung für feines, trockenes Salz (60) besteht; die **dadurch gekennzeichnet ist, dass** die untere reibende/klopfende Streuvorrichtung für feuchtes Salz (20) ein reibendes/klopfendes Drehteil (21) vom Klappentyp (24), das quer unterhalb des oberen Arms der Fördervorrichtung (10) positioniert ist, eine unter der gesamten Länge der Fördervorrichtung positionierte Salzauffangschale (27); eine Vorrichtung (40), um das Salz im Bereich der unterhalb des besagten Drehteils (21) gelegenen Schale anzuhäufen, enthält. Besagte Klappen (24) sind so angeordnet, um das feuchte Salz in der besagten Salzauffangschale (27) zu sammeln und es über den oberen Arm der Fördervorrichtung (10) anzutreiben und um mit der unteren Fläche der Fleischstücke (7) in Berührung zu kommen.

2. Maschine zum Reiben und Salzen von Fleischstücken nach Anspruch 1, **dadurch gekennzeichnet, dass** die Salzauffangschale (27) einen abwärts konvergierenden Querschnitt aufweist und zumindest eine Schraubverbindung (40) mit einer Verkleidung (41) in Form eines oben offenen Kanals, in der die Wände der Auffangschale (27) zusammenlaufen, enthält. Die Schraubverbindung hat zwei Schrauben (42), die zur Mitte des Schaftes (43) der Schraubverbindung hin zusammenlaufen.

3. Maschine zum Reiben und Salzen von Fleischstücken nach Anspruch 2, **dadurch gekennzeichnet, dass** das Drehteil (21) vom Klappentyp (24) innerhalb einer Wanne (25) positioniert ist, die von den beiden zusammenlaufenden Schrauben mit Salz gespeist wird.

4. Maschine zum Reiben und Salzen von Fleischstücken nach Anspruch 2, **dadurch gekennzeichnet, dass** sie zwei nebeneinander gelagerte, parallele Schraubverbindungen (40) enthält, von denen jede eine Verkleidung (41) in Form eines oben offenen Kanals, in der die Wände der Auffangschale (27) zusammenlaufen, enthält: Jede Konstruktion enthält zwei Schrauben (42), die zur Mitte von jedem Schaft (43) der Schraubverbindung hin zusammenlaufen.

5. Maschine zum Reiben und Salzen von Fleischstücken nach Anspruch 1, **dadurch gekennzeichnet, dass** sie an den Seiten der Fördervorrichtung (10), innerhalb des Einflussbereichs der ersten reibenden/klopfenden Vorrichtung (20) zumindest ein Paar reibender/klopfender Vorrichtungen enthält, von denen jede ein um eine Senkrechtachse rotierendes Klappen-Tragteil hat, die Klappen (74) desselben sind so angeordnet, dass sie mit der Seitenfläche der Fleischstücke (7) in Berührung kommen.

6. Maschine zum Reiben und Salzen von Fleischstücken nach Anspruch 1, **dadurch gekennzeichnet, dass** der bewegliche Teil der Fördervorrichtung (10) aus einigen, auseinander gezogenen, nebeneinander gelagerten, Gliederketten (11) oder gleichwertigen Vorrichtungen besteht, die so angeordnet sind, dass sie die Fleischstücke (7) tragen.

7. Maschine zum Reiben und Salzen von Fleischstücken nach Anspruch 6, **dadurch gekennzeichnet, dass** der obere Arm der Förderketten (11) mit seiner nach unten gerichteten Konkavität einen Bogen beschreibt.

8. Maschine zum Reiben und Salzen von Fleischstücken nach Anspruch 1, **dadurch gekennzeichnet, dass** sie einen Metallrahmen (14) mit Stangen (14a) enthält, die in den einzelnen, vertikalen Ebenen der Förderketten (11) rotieren und auf ihnen lagern. Der Rahmen ist so angeordnet, dass er gleitend auf den innerhalb des Einflussbereichs der reibenden/klopfenden Vorrichtungen (20,50) positionierten Fleischstücken lagert (7), um besagte Stücke (7) steif mit den Förderketten (11) beizubehalten.

9. Maschine zum Reiben und Salzen von Fleischstücken nach Anspruch 1, **dadurch gekennzeichnet, dass** die Ausgabe- und Dosiervorrichtung für feines, trockenes Salz ein Gehäuse mit zwei Seitenwänden (600), zwischen denen ein Trichter (61) gelagert ist, dessen untere Öffnung (62) eine Dosierwalze (63) mit polyedrischem Querschnitt überlagert, Vorrichtungen (65), um die zwischen der unteren Trichteröffnung (61) und der Dosierwalze (63) vorhandene Salzausgabeöffnung zu verändern und Vorrichtungen (64), um die zwischen der Trichterkante (61) und der Dosierwalze (63) geschaffene Salzausgabeöffnung zu öffnen beziehungsweise zu schließen enthält.

10. Maschine nach Anspruch 9, **dadurch gekennzeichnet, dass** die Dosierwalze (63) motorisiert ist und an eine der Trichterkanten (61) angrenzt, wo ein derart angeordneter Schieber (64) vorgesehen ist, dass er eine Position, in der er den Raum zwischen der Dosierwalze (63) und der gegenüberliegenden Trichterkante (61) schließt und eine Position, in der er den besagten Raum öffnet, einnimmt, wobei eine regulierbare Verschlussklappe (65), um besagten Raum zu verändern, vorgesehen ist.

11. Maschine nach Anspruch 9, **dadurch gekennzeichnet, dass** die untere Öffnung (62) des Trichters (61) in die Drehrichtung der Dosierwalze (63) geneigt ist.

12. Maschine nach Anspruch 9, **dadurch gekennzeichnet, dass** die besagte Dosierwalze (63) auf einer Welle (634) montiert ist, die von den Seitenwänden (600) des Gehäuses gestützt und vom Motor (630) gedreht wird.

13. Maschine nach Anspruch 9, **dadurch gekennzeichnet, dass** die Dosierwalze (63) axial in zwei und vorzugsweise, drei Teile (631), (632), (633) geteilt ist.

14. Maschine nach Anspruch 13, **dadurch gekennzeichnet, dass** der Mittelteil (632) der besagten Dosierwalze (63) ständig von der Welle (634) drehgekuppelt wird.

15. Maschine nach Anspruch 13, **dadurch gekennzeichnet, dass** die Teile (631) und (632), in welche die Dosierwalze (63) geteilt ist, durch ausrückbare Kupplungsvorrichtungen drehbar zur Welle (634) gezwungen werden können.

16. Maschine nach Anspruch 15, **dadurch gekennzeichnet, dass** es sich bei den besagten, ausrückbaren Vorrichtungen um elektromagnetische Kupplungen handelt.

17. Maschine nach Anspruch 9, **dadurch gekennzeichnet, dass** der besagte Schieber (64) an einem Paar Verbindungsstangen (640) aufgehängt ist, die an ihrem entgegengesetzten Ende von zwei Kurbeln auf einer Welle (641), die drehbar zwischen die Seitenwände (600) des Gehäuses montiert ist, gestützt werden und an einem Ende, einen außen an der Seitenwand befindlichen, vom Bediener bedienbaren Hebel (642) tragen.

18. Maschine nach Anspruch 9, **dadurch gekennzeichnet, dass** die zwischen einer Trichterkante (61) und der Dosierwalze (63) geschaffenen Vorrichtungen zum Öffnen beziehungsweise Schließen der Salzausgabeöffnung eine Drehverschlussklappe (65) enthalten, die an einer Welle (651) befestigt ist, die drehbar zwischen den Seitenwänden (600) des Gehäuses montiert und mit einer von einer Zylinderkolbeneinheit geschalteten Kurbel ausgestattet ist; die Zylinderkolbeneinheit ist am Gehäuse befestigt, um die Verschlussklappe (65) zwischen zwei Positionen zu drehen, eine an die Dosierwalze (63) angrenzend und eine von der Dosierwalze (63) entfernt.

19. Maschine nach Anspruch 18, **dadurch gekennzeichnet, dass** die besagte Verschlussklappe (65) in mindestens zwei und wenn möglich, drei Teile (65a), (65b), (65c) geteilt ist, von denen jeder unabhängig von den anderen, von einer Zylinderkolbeneinheit (653a), (653b), (653c) betrieben wird.

## Revendications

1. Machine de frottage et de salage, avec du sel ou des agents de salaison, de morceaux de viande destinés à être salés et conservés, comprenant un transporteur sans fin (10) des morceaux de viande (7) dont un organe mobile (11) peut comporter des orifices, au moins un dispositif (20) distributeur de sel humide de frottage-battage disposé sous le brin supérieur du transporteur, le dispositif (50) distributeur de sel humide de frottage-battage étant disposé au-dessus du brin supérieur du transporteur dans la région du dispositif inférieur (20) de frottage-battage, et un dispositif (60) de dosage-distribution de sel fin sec disposé au-dessus du brin supérieur du transporteur en aval du dispositif (20, 50) distributeur de frottage-battage,
**caractérisée en ce que** le dispositif (20) distributeur de sel humide de frottage-battage comporte un organe rotatif (21) de frottage-battage du type (24) à volets qui est disposé transversalement sous le brin supérieur du transporteur (10), un plateau (27) de récupération de sel disposé sous toute la longueur du transporteur, un dispositif (40) d'accumulation du sel dans la région du plateau disposé sous l'organe rotatif (21), les volets (24) étant destinés à collecter le sel humide dans le plateau de récupération (27) et à la projeter au-dessus du brin supérieur du transporteur (10) et à venir au contact de la surface inférieure des morceaux de viande (7).

2. Machine de frottage et de salage de morceaux de viande selon la revendication 1, **caractérisée en ce que** le plateau (27) de récupération de sel a une section qui converge vers le bas et comporte au moins un ensemble à vis (40) ayant une enveloppe (41) sous forme d'un canal ouvert vers le haut et dans lequel convergent les parois du plateau (27) de récupération, l'ensemble à vis ayant deux vis (42) qui convergent vers le centre de l'arbre (43) de l'ensemble à vis.

3. Machine de frottage et de salage de morceaux de viande selon la revendication 2, **caractérisée en ce que** l'organe rotatif (21) du type à volet (24) est disposé dans une rigole (25) alimentée en sel par deux vis convergentes.

4. Machine de frottage et de salage de morceaux de viande selon la revendication 2, **caractérisée en ce qu'**elle comprend deux ensembles à vis (40) parallèles et placés côte à côte, comprenant chacun une enveloppe (41) sous forme d'un canal ouvert vers le haut et dans lequel les parois du plateau (27) de récupération convergent, chaque ensemble comprenant deux vis (42) qui convergent vers le centre de chaque arbre (43) de l'ensemble à vis.

5. Machine de frottage et de salage de morceaux de viande selon la revendication 1, **caractérisée en ce qu'**elle comprend, aux côtés du transporteur (10) dans la région d'influence du premier dispositif de frottage-battage (20), au moins une paire de dispositifs de frottage-battage ayant chacun un organe de support de volets qui tourne autour d'un axe vertical, ces volets (74) étant disposés afin qu'ils viennent au contact de la surface latérale des morceaux de viande (7).

6. Machine de frottage et de salage de morceaux de viande selon la revendication 1, **caractérisée en ce que** l'organe mobile du transporteur (10) est constitué de plusieurs chaînes articulées espacées (11) placées côte à côte ou d'un dispositif équivalent destiné à supporter les morceaux de viande (7).

7. Machine de frottage et de salage de morceaux de viande selon la revendication 6, **caractérisée en ce que** le brin supérieur des chaînes de transport (11) délimite un trajet courbé dont la concavité est tournée vers le bas.

8. Machine de frottage et de salage de morceaux de viande selon la revendication 1, **caractérisée en ce qu'**elle comprend un châssis métallique (14) ayant des tiges (14a) qui tournent dans des plans verticaux individuels des chaînes de transport (11) et qui sont en appui sur elles, le châssis étant disposé afin qu'il porte de façon coulissante sur les morceaux de viande (7) disposés dans la région d'action du dispositif de frottage-battage (20, 50) afin que ces morceaux (7) soient maintenus rigidement sur les chaînes de transport (11).

9. Machine de frottage et de salage de morceaux de viande selon la revendication 1, **caractérisée en ce que** le dispositif de distribution et de dosage du sel sec fin comporte un carter ayant deux parois latérales (600) entre lesquelles est supportée une trémie (61) dont l'embouchure inférieure (62) recouvre un rouleau de dosage (63) de section polyédrique, un dispositif (65) destiné à faire varier le canal de distribution de sel qui existe entre l'embouchure inférieure de la trémie (61) et le rouleau de dosage (63), et un dispositif (64) destiné à fermer et ouvrir respectivement le canal de distribution de sel créé entre le bord de la trémie (61) et le rouleau de dosage (63).

10. Machine selon la revendication 9, **caractérisée en ce que** le rouleau de dosage (63) est motorisé et est adjacent à l'un des bords de la trémie (61), un obturateur (64) étant disposé afin qu'il prenne une position dans laquelle il ferme l'espace compris entre le rouleau de dosage (63) et le bord opposé de la trémie (61), et une position dans laquelle il ouvre cet espace, un obturateur réglable (65) étant placé de manière qu'il fasse varier cet espace.

11. Machine selon la revendication 9, **caractérisée en ce que** l'embouchure inférieure (62) de la trémie (61) est inclinée dans le sens de rotation du rouleau de dosage (63).

12. Machine selon la revendication 9, **caractérisée en ce que** le rouleau de dosage (63) est monté sur un arbre (634) supporté par les parois latérales (600) du carter et entraîné en rotation par le moteur (630).

13. Machine selon la revendication 9, **caractérisée en ce que** le rouleau de dosage (63) est divisé axialement en deux parties ou de préférence en trois parties (631, 632, 633).

14. Machine selon la revendication 13, **caractérisée en ce que** la partie centrale (632) du rouleau de dosage (63) est toujours en coopération par torsion avec l'arbre (634).

15. Machine selon la revendication 13, **caractérisée en ce que** les parties (631 et 632) qui divisent le rouleau de dosage (63) peuvent être retenues en rotation sur l'arbre (634) par un dispositif séparable d'accouplement.

16. Machine selon la revendication 15, **caractérisée en ce que** le dispositif séparable est formé d'embrayages électromagnétiques.

17. Machine selon la revendication 9, **caractérisée en ce que** l'obturateur (64) est supporté par une paire de tiges de raccordement (640) supportées à leurs extrémités opposées par une paire de manivelles placées sur un arbre (641) monté afin qu'il puisse tourner entre les parois latérales (600) du carter et portant à une extrémité un levier (642) placé à l'extérieur de la paroi latérale et qui peut être manoeuvré par l'opérateur.

18. Machine selon la revendication 9, **caractérisée en ce que** le dispositif de fermeture et d'ouverture respectivement du canal de distribution de sel créé entre le bord de la trémie (61) et le rouleau de dosage (63) comporte un obturateur rotatif (65) fixé à un arbre (651) monté afin qu'il tourne entre les parois latérales (600) du carter et ayant une manivelle qui coopère avec une unité à piston et cylindre fixée au carter afin que l'obturateur (65) tourne entre deux positions, l'une qui est adjacente au rouleau de dosage (63) et une autre qui est distante du rouleau de dosage (63).

19. Machine selon la revendication 18, **caractérisé en ce que** l'obturateur (65) est divisé en au moins deux parties et de préférence en trois parties (65a, 65b, 65c) manoeuvrées chacune indépendamment des autres par une unité à piston et cylindre (653a, 653b, 653c).
